(19) Europäisches Patentamt

European Patent Office

Office européen des brevets

(11) **EP 1 333 269 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(51) Int Cl.:
*G01M 17/007* (2006.01)　　*G01L 3/22* (2006.01)

(21) Anmeldenummer: **03007999.0**

(22) Anmeldetag: **10.01.2000**

(54) **Rollenprüfstand für Kraftfahrzeuge**

Roll test bench for vehicles

Banc d'essai à rouleaux pour véhicules

(84) Benannte Vertragsstaaten:
**AT BE CH CY DE DK ES FI FR GB GR IE IT LI LU MC NL PT SE**

(30) Priorität: **11.01.1999 DE 19900620**

(43) Veröffentlichungstag der Anmeldung:
**06.08.2003 Patentblatt 2003/32**

(62) Dokumentnummer(n) der früheren Anmeldung(en) nach Art. 76 EPÜ:
**00100147.8 / 1 039 282**

(73) Patentinhaber: **MAHA Maschinenbau Haldenwang GmbH & Co. KG**
**87490 Haldenwang (DE)**

(72) Erfinder: **Knestel, Anton**
**87496 Hopferbach (DE)**

(74) Vertreter: **Beetz & Partner**
**Steinsdorfstrasse 10**
**80538 München (DE)**

(56) Entgegenhaltungen:
**EP-A- 0 522 198**　　**WO-A-97/32189**
**US-A- 4 055 996**　　**US-A- 5 375 460**
**US-A- 5 522 257**

• **PATENT ABSTRACTS OF JAPAN vol. 010, no. 229 (P-485), 8. August 1986 (1986-08-08) -& JP 61 065133 A (TOYOTA MOTOR CORP), 3. April 1986 (1986-04-03)**

**Beschreibung**

Die Erfindung betrifft einen Rollen- bzw. Trommelprüfstand für Kraftfahrzeuge gemäß dem Oberbegriff des Patentanspruchs 1.

Bei der Prüfung von fahrdynamischen Parametern und auch der Abgaswerte von durch Brennkraftmaschinen angetriebenen Kraftfahrzeugen werden in neuerer Zeit komplexe Rollen- bzw. Trommelprüfstände eingesetzt, die eine Simulation unterschiedlicher Fahrbedingungen ermöglichen. Zur Durchführung von Untersuchungen beispielsweise der Bremsfunktionen, der Abgasemissionen od. dgl. wird das Prüffahrzeug im Rollenstand durch z.B. Gestänge fixiert, wobei je nach der Auslegung des Prüfstandes entweder die beiden Räder einer Achse oder aber die beiden Räder mehrerer Achsen auf dem Scheitelbereich je einer Trommel bzw. eines Rollenpaares aufstehen. Die Trommeln bzw. die Rollenpaare sind mit Antriebs-/Verzögerungsmaschinen gekoppelt, denen Meßelemente zum Erfassen der entsprechend den verschiedenen Prüfbedingungen auftretenden Drehmomente bzw. Zugkräfte zugeordnet sind.

Bei den zur Prüfung von Fahrzeugen mit sog. Allradantrieb verwendeten Prüfständen müssen die Laufrollen bzw. -trommeln für die Vorderräder und die Laufrollen bzw. -trommeln für die Hinterräder auch bei sich ändernder Prüfgeschwindigkeit mit gleicher Drehzahl bzw. Umfangsgeschwindigkeit umlaufen, weil bei etwa auftretenden Geschwindigkeitsdifferenzen zwischen den vorderen und hinteren Laufrollenpaaren die im Fahrzeug integrierte Elektronik zu Regeleingriffen veranlaßt werden kann. So sind normalerweise die Bremssysteme von Kraftfahrzeugen so ausgelegt, daß bei Betätigung des Bremspedals die Vorderräder stärker als die Hinterräder abgebremst werden. Bei einer Funktionsprüfung des Bremssystems des Prüffahrzeuges können die stärker abgebremsten Vorderräder die zugehörigen Laufrollen des vorderen Prüfsatzes stärker verzögern, mit der Folge, daß das fahrzeugeigene Antiblokkiergerät auf einen zu starken Radschlupf schließt und die Bremskraft der Vorderräder entsprechend verringert. Wird umgekehrt beim Beschleunigen die Antriebsachse und über deren Räder das entsprechende Laufrollenpaar schneller als die nicht getriebene Achse, so kann dies ein Ansprechen des fahrzeugeigenen Antischlupfreglers auslösen, welcher dann die von der Brennkraftmaschine abgegebene Leistung verringert. Es liegt auf der Hand, daß derartige Regeleingriffe die gewünschten Meßergebnisse verfälschen.

In einem zur Funktionsprüfung unterschiedlicher Betriebsparameter von sog. Allrad-Fahrzeugen konzipierten Prüfstand müssen daher nicht nur die Fahrwiderstände, ausgedrückt in A-, B-, C-Koeffizienten, und die aus Beschleunigungen bzw. Verzögerungen resultierenden Kräfte und Momente der bewegten Massen erfaßt und geregelt werden, sondern es müssen auch die Umfangsgeschwindigkeiten der vorderen und hinteren Laufrollen bzw. -trommeln gleich gehalten werden, wobei eine winkelsynchrone Rotation der vorderen und hinteren Laufrollen bzw. -trommeln als optimal angesehen wird.

Aus der US 5 452 605 ist ein Trommelprüfstand für ein Kraftfahrzeug mit Einachs-Antrieb bekannt, bei dem ein einziger Prüfsatz zwei Lauftrommeln und eine mittlere elektrische Antriebsmaschine enthält, die in einem gemeinsamen Tragrahmen gelagert ist und beide Lauftrommeln direkt synchron antreibt. Das Statorgehäuse der Antriebs- bzw. Verzögerungsmaschine ist in zwei vertikalen Stützen des Tragrahmens pendelnd gelagert und zusätzlich über einen Drehmoment- bzw. Kraftsensor am Rahmen abgestützt. Wird beispielsweise bei einer Bremsprüfung des Kraftfahrzeuges die von dessen abgebremsten Rädern auf die Laufrollen übertragene Bremskraft in die Antriebsmaschine eingeleitet, dann reagiert das Statorgehäuse durch eine Verdrehung in den vom Drehmomentsensor bestimmten Grenzen, wobei das Reaktionsmoment des Statorgehäuses vom Drehmoment- bzw. Kraftsensor erfaßt wird. Änderungen des vom Statorgehäuse ausgeübten Drehmomentes werden somit vom Drehmomentsensor als Meßwerte erfaßt. Zur beidseitigen Lagerung des Statorgehäuses im Tragrahmen weist das Statorgehäuse an jeder Stirnseite einen Hohlzapfen auf, in denen über innere Wälzlager die mit den beiden Lauftrommeln verbundene Rotorwelle gelagert ist. Gegenüber dem Tragrahmen ist jeder Hohlzapfen über ein weiteres radial äußeres Wälzlager gelagert. Ein Nachteil dieser Lageranordnung besteht darin, daß im Stillstand der Antriebsmaschine kein Schmierfilm in den Wälzlagern vorhanden ist und die Lagerkörper sich direkt kontaktieren. Dies führt beim Anlaufen der Maschine zu extrem hohen Reibwerten und zu frühzeitigen Beschädigungen der Lageranordnung. Vergrößert wird dieser nachteilige Effekt noch dadurch, daß sich die Wälzkörper durch den bei laufender Maschine vorhandenen Körperschall in die Lagerschalen eingraben können.

Zur Überwindung dieser nachteiligen Effekte ist es aus der US 5 522 257 bekannt, zwei Wälzlager unter Zwischenschaltung eines Mittelrings koaxial übereinander zu montieren und die Mittelringe vor einem Einschalten der Antriebsmaschine über einen Riementrieb mit einer vorgegebenen Drehgeschwindigkeit anzutreiben, um in den beiden Wälzlagern bereits vor der Inbetriebnahme der Antriebsmaschine einen Schmierfilm zu erzeugen. Nachteilig ist allerdings, daß durch die Bewegung der Mittelringe dieser Lager eine Kraft eingeleitet wird, die sich zu dem während der Prüfung zu messenden Drehmoment addiert. Darüber hinaus erfordern die Doppellagerung und der Mittelring mit seinem Drehantrieb einen zusätzlichen technischen Aufwand.

Aus der DE-B-39 20 277 ist ein Rollenprüfstand für allradgetriebene Kraftfahrzeuge bekannt, mit dem auch sog. Giermomente um die Fahrzeughochachse simuliert und erfaßt werden können. Jedes Vorderrad und jedes Hinterrad des zu prüfenden Kraftfahrzeuges ist auf jeweils einem Rollenpaar abgestützt. Um die Räder einzeln antreiben und abbremsen zu können, wird jedes Rollenpaar von einer eigenen Antriebsmaschine angetrieben, wobei zwischen jeder Rolle und der zugehörigen Maschine ein Drehmomentsensor angeordnet ist. Den Antriebsmaschinen sind Stromrichter vorgeschaltet, die jeweils von einem zugehörigen Regelverstärker angesteuert werden. Zur Messung der Drehgeschwindigkeiten der einzelnen Maschinen dienen Tachogeneratoren, wobei jeweils ein Tachogenerator, ein Regelverstärker, ein Stromrichter und eine Antriebsmaschine Bauteile je eines Drehzahlregelkreises sind und alle Regelkreise an einen als Prozeßrechner oder programmierbares Steuergerät ausgebildeten Prozessor angeschlossen sind. Für die Simulation einer Kurvenfahrt können mit Hilfe dieses Prozessors auf der Grundlage einer gewünschten Fahrgeschwindigkeit die dieser Kurvenfahrt entsprechenden unterschiedlichen Umfangsgeschwindigkeiten der kurveninneren bzw. kurvenäußeren Trommeln bestimmt werden.

In der EP-A-O 522 198 ist ein Steuersystem für einen Fahrzeugprüfstand gezeigt, das die Umdrehungsgeschwindigkeiten der zwei Aufstandrollenpaare synchronisiert.

Die US-A-5,522,257 beschreibt einen Fahrzeugprüfstand für Fahrzeuge mit eine angetriebenen Achse, der in einer Grube angeordnet ist. Dabei ist das Startorgehäuse der Antriebsmaschine in einem Tragrahmen gelagert.

Aus der JP-A-61-065133 ist ein Rollenprüfstand für Kraftfahrzeuge bekannt, bei dem ein Prüfsatz in Längsrichtung verschiebbar ist.

Aufgabe der Erfindung ist es, einen Rollenbzw. Trommelprüfstand und ein Verfahren zum Prüfen von Fahrzeugen zu schaffen, die bei konstruktiv verringertem Aufwand genauere Messergebnisse liefern können.

Diese Aufgabe wird erfindungsgemäß gemäß einer Vorrichtung nach Anspruch 1 und eines Verfahrens nach Anspruch 4 gelöst. Die abhängigen Ansprüche betreffen vorteilhafte Ausführungsformen der Erfindung. Erfindungsgemäß ist das Statorgehäuse der Antriebsmaschine über auch im Anfahr- bzw. Startbetrieb praktisch reibungsfreie Lageranordnungen im Tragrahmen gelagert.

Gemäß einer Ausgestaltung der Erfindung weisen die Lageranordnungen konstruktiv einfache Gleitlager auf, in deren Lagerteilen (Lagerschalen) taschenförmige bzw. nutartige Vertiefungen eingearbeitet sind, die mit einem im wesentlichen konstanten tragenden Drucködlstrom beaufschlagt werden. Zwischen den Gleitflächen jedes Lagers entwickelt sich ein ggf. filmartiges Druckmittelpolster von hoher Tragfähigkeit und vernachlässigbaren Reibungswerten gegenüber den relativ geringfügigen Pendelbewegungen des Maschinengehäuses im Tragrahmen. Die vom Maschinengehäuse bei einem Prüfvorgang ausgeübten Drehmomente werden dadurch fehlerfrei vom Kraftmesser erfaßt. Eine dieser Lageranordnungen ist zweckmäßig als axiales Festlager ausgebildet und weist zusätzlich zu dem mit den Tragtaschen versehenen Radialdrucklager ein Axialdrucklager mit eingearbeiteten Taschen auf. Durch diese quasi schwimmende Lagerung des Statorgehäuses werden die bei den herkömmlichen Wälzlagerungen auftretenden Reibungseinflüsse sowie auch Verschleißerscheinungen der Lagerteile vermieden. Beim Einleiten von radialen Kräften, z.B. durch das Gewicht eines aufgefahrenen Fahrzeuges, wird die jeweils innere Lagerschale nach unten gedrückt, wodurch sich die Spaltweiten der unteren Hälfte dieser Traglager verringern und damit die Stützeigenschaft zunimmt.

Zweckmäßig kann je eine Lagerschale jedes Gleitlagers mit einer inneren ggf. PTFE-haltigen Gleitschicht ausgestattet sein, in welcher Nuten netzartig eingearbeitet sind. Das durch diese flachen Nuten zugeführte Druckmittel bildet einen großflächigen dünnen Film von hoher Tragfähigkeit und minimalen Reibwerten.

Zur Erzeugung der Ölströme kann entweder pro Tragtasche ein separates Pumpensegment verwendet werden oder als konstruktiv einfachere Variante kann eine gemeinsame Druckölversorgung mit nur einer einzigen Pumpe und individuellen Regelelementen für die einzelnen Teilströme vorgesehen sein. Durch Auslegung von volumenstromregelnden Ventilen können zur Erzielung einer etwa mittleren Lagerhärte ein konstanter Druckölcdurchfluß, zur Erzielung einer relativ harten Lagerstelle ein mit wachsendem Gegendruck ansteigender Durchfluß oder zur Erzielung einer weichen Lagerstelle ein bei steigendem Gegendruck verringerter Durchfluß eingestellt werden. Mit diesen Variationsmöglichkeiten wird eine gegenüber Wälzlagerungen wesentlich verbesserte Laufruhe erreicht, was beispielsweise bei Geräuschuntersuchungen des Prüffahrzeuges von erheblicher Bedeutung sein kann.

Eine weitere Lageranordnung für die "Pendellagerung" des Statorgehäuses zeichnet sich dadurch aus, daß beidseitig mehrere winkelversetzt angeordnete und in Umfangsrichtung nachgiebige Blattfederelemente mit ihrem radial äußeren Ende an einem in dem Tragrahmen fixierten Kranz und mit ihrem radial inneren Ende an einem vorstehenden Bauteil jeder Stirnwand des Statorgehäuses befestigt sind. Diese Blattfederelemente sind so ausgelegt, daß sie den relativ kleinen Verdrehbewegungen des Statorgehäuses nur einen vernachlässigbar kleinen Widerstand entgegensetzen und nahezu ausschließlich nur Gewichtskräfte aufnehmen.

Zur weiteren Steigerung der Meßgenauigkeit zeichnet sich der erfindungsgemäße Trommelprüfstand noch dadurch aus, daß der zwischen dem Statorgehäuse und der Rahmenkonstruktion angeordnete Kraftmesser als Kraftmeßdose ausgebildet ist, deren eines Funktionsglied einen Kolben aufweist, welcher in einem beidseitig mit einem Druckölstrom beaufschlagten Zylinder schwimmend abgestützt ist. Durch diese schwimmende Abstützung des Funktionsgliedes der Kraftmeßdose werden die bei herkömmlichen Abstützungen unvermeidlichen Meßfehler vermieden, die sich durch Reibung im Mehrgelenk-Gestänge sowie Verkantungen in Teleskop-Gestängen ergeben. Bei den herkömmlicherweise als Gelenkösen ausgebildeten und als einfache Gleitlager wirkenden Ausführungen werden durch Haftreibung schräge Kräfte in die Kraftmeßdose eingeleitet, welche die Meßwerte verfälschen können. Die bei dem erfindungsgemäßen Prüfstand verwendete Kraftmeßdose ist einerseits am pendelnd gelagerten Statorgehäuse der Antriebsmaschine oder an dem Tragrahmen befestigt und andererseits mit dem Kolben verbunden, der in dem flachen entweder am Tragrahmen oder aber am Statorgehäuse befestigten Zylinder aufgenommen ist. Die Oberseite und die Unterseite des Kolbens werden mit je einem vorzugsweise konstanten Druckölvolumenstrom beaufschlagt, der entweder von einer separaten Pumpe oder aber von der Druckölversorgung für die Lageranordnungen bereitgestellt wird. Die Regelung bzw. Dosierung des Druckölvolumens und des geeigneten Flüssigkeitsdruckes erfolgt über geeignete Regelglieder, welche eine schwimmende Abstützung des Kolbens gewährleisten und Anschläge an der Zylinderwandung verhindern.

Damit zum Prüfen von Fahrzeugen mit mehreren angetriebenen Achsen die Position der beiden Prüfsätze den unterschiedlichen Radständen der zu prüfenden Fahrzeuge angepaßt werden kann, zeichnet sich ein Trommelprüfstand gemäß der Erfindung dadurch aus, daß ein erster Prüfsatz ortsfest und der zweite Prüfsatz in Längsrichtung verfahrbar in einer gemeinsamen Grube angeordnet ist, wobei jeder Prüfsatz aus einem Tragrahmen, einer mittigen elektrischen Antriebsmaschine mit pendelnd im Tragrahmen gelagertem Statorgehäuse und aus zwei seitlichen großvolumigen Trommeln besteht, die von der beidseitig vorstehenden Maschinenwelle direkt synchron angetrieben bzw. abgebremst werden.

Zur tragenden Abdeckung der sich bei den Verfahrbewegungen des zweiten Prüfsatzes ergebenden Freiräume der Grube sind vorteilhaft an den Auffahrplatten dieses zweiten Prüfsatzes in Längsrichtung jalousieartig flexible quersteife Tragbänder befestigt, welche die zum Auf- und Abfahren des Prüfwerkzeuges erforderlichen Fahrstreifen von variabler Länge bilden.

Um auch bei größeren Fahrstrecken die Grubentiefe klein zu halten, zeichnet sich eine weitere bevorzugte Ausgestaltung der Erfindung dadurch aus, daß die freien Endabschnitte dieser vorzugsweise aus Gliederketten mit Tragplatten bestehenden Tragbänder in je einem Speicher innerhalb der Grube aufgenommen sind, in welchem sie U-förmig umgelenkt werden.

Ein Prüfstand zum Prüfen von einachsig angetriebenen Kraftfahrzeugen bei stillgelegter Bordelektronik (ABS, ASR, usw.) zeichnet sich durch einen einzigen Prüfsatz der vorstehend beschriebenen Bauart aus, der in einer relativ langen Grube motorisch längsverfahrbar ist und die jalousieartigen Abdeckungen aufweist.

Um erhöhte Abstrahlungen des prüfstandseigenen Körperschalls zu verhindern, kann in weiterer Ausgestaltung der Erfindung jeder Prüfsatz auf Dämpfern schwingungsisoliert auf dem Grubenboden abgestützt sein. Zusätzlich können die Überfahrplatten inklusive einer jeweiligen Zentriereinrichtung für das auffahrende Fahrzeugrad als separate Module ausgebildet und unabhängig vom jeweiligen Prüfsatz am Grubenrand befestigt werden. Durch diese lokale und konstruktive Trennung zwischen jedem Prüfsatz und den Überfahr-Bauteilen ergibt sich die Möglichkeit, den Oberbau mit zusätzlichen Schall- bzw. Wärmeisolierungen auszurüsten. Insbesondere bei Prüfungen in Klimakammern müssen durch eine derartige Isolierung die Prüfsätze mit ihren Antriebsmaschinen und den entsprechenden Meßmitteln nicht den gleichen tiefen Temperaturen wie das zu prüfende Fahrzeug ausgesetzt werden.

Eine hinsichtlich konstruktivem Aufwand und Betriebssicherheit besonders vorteilhafte Weiterbildung der Erfindung zeichnet sich dadurch aus, daß als Antriebsmaschinen statt der bisher eingesetzten Gleichstrom- bzw. Asynchronmaschinen erfindungsgemäß Synchronmaschinen eingesetzt werden, die unter Verwendung von Frequenzumrichtern parallel betrieben werden. Die Ausgangsfrequenz $f_d$ des Umrichters wird nach der folgenden Formel bestimmt:

$$f_d = \frac{\Sigma F \cdot t}{m \cdot U \cdot P}$$

In dieser Formel bedeuten:

$\Sigma F$ = Summe aller Kräfte (N)
$t$ = Zeit (s)
$m$ = zu simulierende Masse (kg)
$U$ = Umfang der jeweiligen Laufrolle (m)
$P$ = Polpaarzahl der Synchronmaschine

Auf der Grundlage des zweiten Newton'sches Gesetzes bestimmt sich die Prüfgeschwindigkeit aus der Summe der auftretenden Kräfte dividiert durch die simulierte Fahrzeugmasse. Über den Durchmesser der Trommeln wird die Wellendrehzahl ermittelt und unter Einbeziehung der Polpaarzahl der Antriebsmaschinen ergibt sich ein direkter Bezug der ermittelten Umrichterfrequenz zur Prüfgeschwindigkeit. Meßfühler zum Erfassen von Drehzahlen und/oder Geschwindigkeiten sind nicht notwendig, was einen wesentlichen Vorteil gegenüber den herkömmlichen Systemen mit mehreren Tachogeneratoren darstellt.

Die Erregung der Synchronmaschinen kann über Schleifringe oder über einen magnetischen Überträger erfolgen. Von besonderem Vorteil ist die Anwendung von permanent erregten Maschinen. Um die bei Synchronmaschinen bekannten Pendelschwingungen möglichst zu unterdrücken, können spezielle Dämpferstäbe z.B. als Kurzschlußwicklungen eingebaut werden. Durch die Fremderregung der Maschinen laufen alle Motorwellen frequenzsynchron, wobei durch die zusätzlich zur permanenten Erregung angebrachten Kurzschlußwicklungen die unerwünschten Pendelschwingungen der jeweiligen Antriebsmaschine minimiert werden.

Ein anderes besonders zweckmäßiges System zur Erzielung eines Synchronlaufes der Antriebsmaschinen und der ihnen zugeordneten Lauftrommeln zeichnet sich dadurch aus, daß die rotierenden Drehmassen dadurch erhöht bzw. erniedrigt werden, indem entsprechend den jeweils auftretenden Winkelbeschleunigungen Kräfte simuliert werden, die zu den Massenträgheitskräften hinzuaddiert oder abgezogen werden. Die entsprechenden zusätzlichen elektrisch simulierten Massen errechnen sich nach der folgenden Gleichung:

$$ F_{soll} = F_{abc} + \left( m \cdot \frac{dv}{dt} \right) . $$

$F_{soll}$ = die von den Antriebsmaschinen aufzubringende Zugkraft (N)
$F_{abc}$ = Zugkraft der Fahrwiderstände (N)
m = zu simulierende Masse
dv = Geschwindigkeitsänderung
dt = Zeiteinheit

Der Vorzug dieser Simulation ist, daß auch beliebig kleine oder gar keine simulierten Massen eingestellt werden können. Ein Nachteil des aus der DE-B-39 20 277 bekannten Verfahrens besteht darin, daß hier keine beliebig kleinen Massen simuliert werden können, da eine Masse "Null" bei dem hier angewandten Berechnungsverfahren eine Division durch Null ergeben würde. Dementsprechend müssen bei diesem bekannten Verfahren die rotierenden Massen des Prüfstandes relativ klein gehalten werden, so daß die für das Fahrzeug zu simulierenden Massen entsprechend groß sein müssen. Dies hat jedoch den Nachteil, daß die Antriebsmaschinen.einen relativ großen Anteil der Fahrzeugmasse simulieren und dementsprechend groß dimensioniert sein müssen. Um relativ kleinere und kostengünstigere Antriebsmaschinen einsetzen zu können und ein verbessertes Ansprechverhalten bei erhöhter Genauigkeit zu erzielen, sollte die Differenz zwischen den mechanisch rotierenden Massen und den zu simulierenden translatorischen Fahrzeugmassen möglichst klein gehalten werden.

Gleichzeitig ist ein synchroner Lauf der Trommeln für die Vorderräder und der Trommeln für die Hinterräder erforderlich, wobei die Funktion der Massensimulation gewährleistet bleiben muß. Bei einem bevorzugten System der Erfindung wird dies dadurch erreicht, daß die Drehwinkel der vorderen und der hinteren Antriebsmaschine erfaßt werden. Durch Subtraktion dieser beiden Drehwinkel wird eine Winkeldifferenz gebildet, die auf einen PID-Regler geschaltet wird. Das von diesem PID-Regler erzeugte Ausgangssignal wird zu dem Stellsignal für den einen Antriebsmotor addiert und vom Stellsignal für den zweiten Antriebsmotor subtrahiert. Dadurch bleibt die Summe der Drehmomente für die Massensimulation gleich.

Statt der sonst üblichen Inkrementalencoder werden bei dem erfindungsgemäßen System vorteilhaft als Drehwinkelfühler sog. Sinus-/Cosinus-Encoder verwendet. Diese haben gegenüber den digitalen Encodern den Vorteil, daß über den analogen Spannungswert des Sinus-/Cosinus-Signals eine entsprechend hohe Auflösung für die Winkeldifferenz erreicht wird. Aus dem Sinus-/Cosinus-Signal kann durch einfachen Schmitt-Trigger wieder ein normales Quadratur-Signal erzeugt werden, daß z.B. für die Vektorregelung der jeweiligen Antriebsmaschine verwendet werden kann.

Anstelle der Drehwinkel der beiden Antriebsmaschinen kann auch die Umfangsgeschwindigkeit der beiden Laufrollen voneinander subtrahiert werden. Die Differenzgeschwindigkeit wird wie zuvor auf einen PID-Regler geschaltet und das so erzeugte Stellsignal zum Stellsignal des Fahrwiderstandsreglers addiert bzw. von der jeweils anderen Seite subtrahiert. Dieses System bietet zwar im Gegensatz zu den vorstehend beschriebenen Winkelregelungen nur zwei konstante Prüfgeschwindigkeiten (keinen Winkelsynchronumlauf der Trommeln), es kommt jedoch mit einfacheren Geschwindigkeitsmeßelementen aus.

Ferner können auch die Wegstrecken der beiden Trommeln voneinander subtrahiert werden. Die Wegstreckendifferenz wird wie zuvor auf einen PID-Regler geschaltet und das so erzeugte Signal wird zum Stellsignal des Fahrwiderstandsreglers für die eine Antriebsmaschine addiert und für die zweite Antriebsmaschine subtrahiert.

Weitere Besonderheiten und Vorzüge der Erfindung lassen sich den Zeichnungen und der folgenden Beschreibung bevorzugter Ausführungsbeispiele entnehmen. Es zeigen:

Fig. 1      einen Trommelprüfstand gemäß der Erfindung zur Prüfung von zweispurigen Kraftfahrzeugen mit Zwei- und Vier-Rad-Antrieb in Seitenansicht;

Fig. 2      einen Teil eines Trommelprüfstandes zur Prüfung von Kraftfahrzeugen mit Zwei-Rad-Antrieb in schematischer Seitenansicht;

Fig. 3      den Trommelprüfstand nach Fig. 1 in Draufsicht;

Fig. 4      eine Überfahr- und Zentriervorrichtung in ihrer Betriebsstellung und in der Ruhelage;

Fig. 5      einen im Trommelprüfstand nach Fig. 1 bzw. 2 eingesetzten Prüfsatz;

Fig. 6      den Prüfsatz nach Fig. 1 in schematischer Stirnansicht;

Fig. 7      schematisch und vergrößert eine Druckmeßdose mit hydraulischer Abstützung;

Fig. 8      schematisch eine Gleitlageranordnung für das Statorgehäuse im schematischen Axialschnitt und im Querschnitt;

Fig. 9 eine weitere Ausführung einer Lageranordnung für das Statorgehäuse im Axialschnitt;

Fig. 10 die Steuereinrichtung für zwei Antriebsmaschinen eines Rollenprüfstandes im regelungstechnischen Blockschaltbild;

Fig. 11 eine andere Steuereinrichtung für die beiden Antriebsmaschinen eines Trommelprüfstandes im Blockschaltbild.

Bei den im folgenden beschriebenen Prüfständen handelt es sich um komplexe Anlagen, die vorzugsweise von den Automobilherstellern zur Untersuchung verschiedenster Fahrzeugparameter insbesondere bei der Entwicklung neuer Fahrzeugtypen eingesetzt werden.

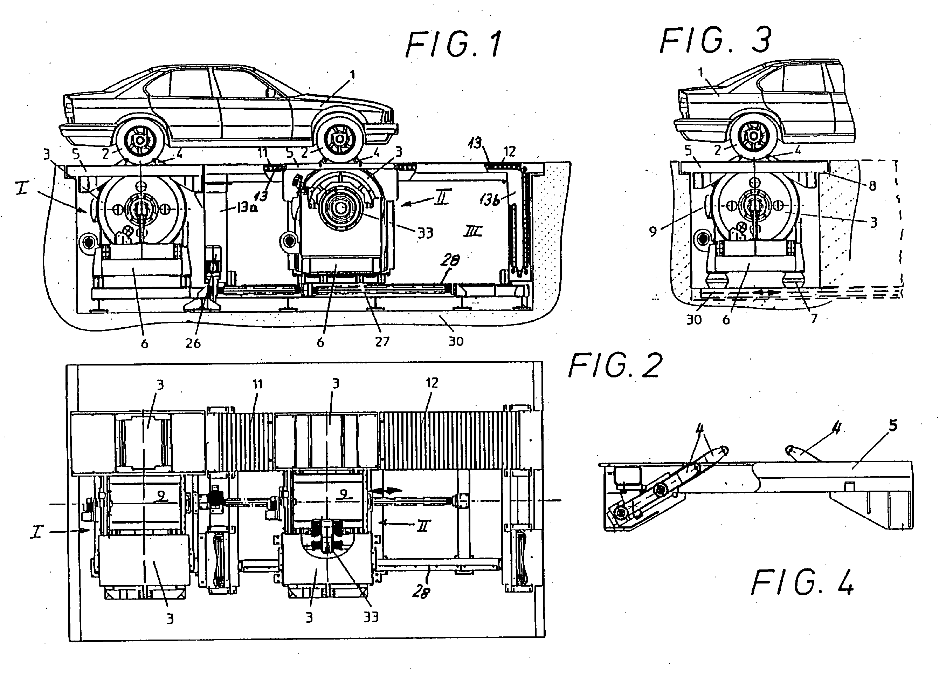

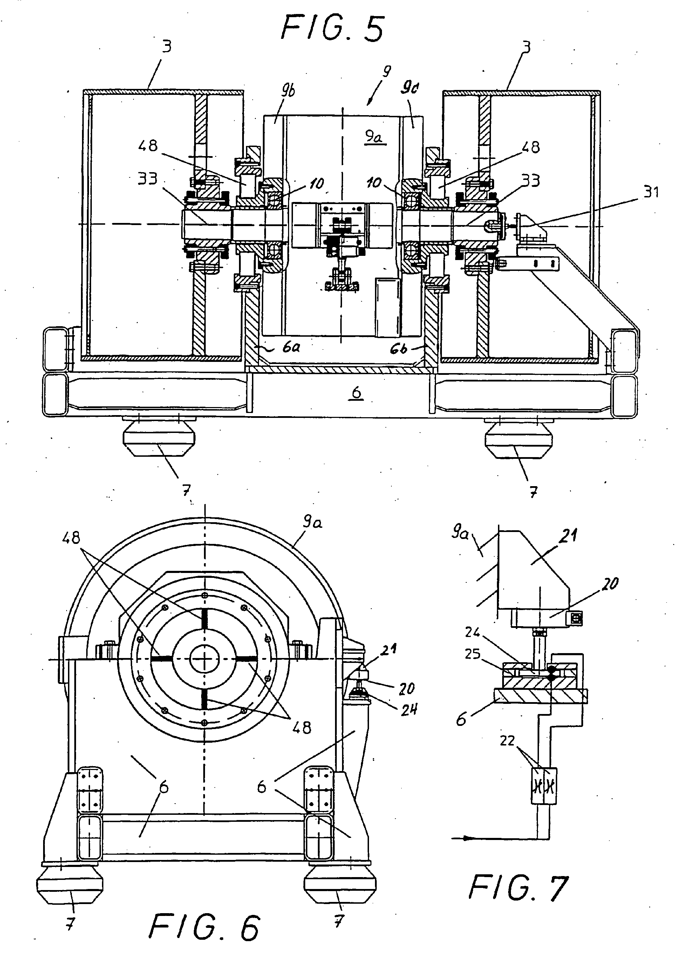

Der in den Figuren 1 und 3 dargestellte Trommelprüfstand ist zur Prüfung von zweispurigen Kraftfahrzeugen mit einer oder zwei angetriebenen Achsen konzipiert und verfügt über zwei in einer gemeinsamen Grube III angeordnete Prüfsätze I und II, von denen der eine Prüfsatz I ortsfest montiert und der zweite Prüfsatz II zur Anpassung an unterschiedliche Fahrzeuglängen auf einem geeigneten Unterbau in der Grube längsverfahrbar ist. Jeder Prüfsatz I und II enthält zwei Trommeln 3, deren Durchmesser hier etwa dem zweifachen Durchmesser eines Fahrzeugrads 2 entspricht, und eine gemeinsame Antriebsmaschine 9 in sog. Pendelausführung, die mittig zwischen den beiden Trommeln 3 angeordnet ist und beide Trommeln 3 über eine gemeinsame Welle 33 direkt antreibt (vgl. Fig. 5). Die bewegten Massen der Prüfsätze sind auf die Massen der zu prüfenden Fahrzeuggattung abgestimmt.

Der Trommelprüfstand nach Fig. 2 verfügt nur über einen einzigen Prüfsatz, der in Aufbau und Funktion dem ortsfesten Prüfsatz I oder dem fahrbaren Prüfsatz II in Fig. 1; 3 entspricht. Die längsverfahrbare Ausbildung ermöglicht die jeweils optimierte Durchführung bestimmter Prüfvorgänge ohne Änderung der Fahrzeugposition.

Nachdem beim Prüfstand nach Fig. 1; 3 der längsverfahrbare Prüfsatz II in seiner durch den Typ des zu prüfenden Fahrzeugs vorgegebenen Stellung in der Grube III positioniert wurde, wird ein Fahrzeug 1 in den Prüfstand eingefahren, so daß seine Vorderräder 2 auf dem Scheitelbereich je einer Trommel 3 des Prüfsatzes II und seine Hinterräder 2 auf dem Scheitelbereich je einer Trommel 3 des ersten Prüfsatzes I aufstehen. Zum genauen Einrichten des Fahrzeugs 1 bzw. seiner Räder 2 dienen die in Fig. 4 dargestellten Richtvorrichtungen. Jede dieser Richtvorrichtungen hat zwei gegensinnig unter einem spitzen Winkel geneigte Stützstreben 4, die in Längsrichtung mechanisch oder hydraulisch so verstellbar sind, daß ihre balligen freien Enden am Rad bzw. Reifen in der in Fig. 1 dargestellten Weise angreifen. Die Stützstreben 4 können nach dem Richtvorgang in eine Ruhelage unterhalb einer jeweiligen Überfahrplatte 5 zurückgestellt werden.

Wie aus den Figuren 1 bis 3 ersichtlich, bilden die Überfahrplatte 5 mit u.a. der Richtvorrichtung 4 jeweils einen eigenständigen Oberbaumodul, der ohne mechanische Verbindung zu dem zugehörigen Prüfsatz I bzw. II separat am Grubenrahmen befestigt ist. Dadurch wird eine mechanische und akustische Entkopplung der Prüfsätze von der das Fahrzeug aufnehmenden Tragkonstruktion erreicht, was eine erhebliche Verminderung von Geräuschemissionen und anderen unerwünschten Einflüssen bewirkt. Zur weitergehenden Verringerung dieser Einflüsse können die Module bzw. deren Bauteile 4, 5 mit Isolier- oder Dämpfungsmitteln versehen sein.

Zum Einstellen der vorgegebenen Position des längsverfahrbaren Prüfsatzes II ist ein Motor 26 in der Grube III fest montiert, der über einen Lineartrieb 27, z.B. eine Gliederkette, an einem stabilen Bauteil des Prüfsatzes II angreift. Dieser Prüfsatz II ist mit seinem Tragrahmen 6 auf zwei in der Grube III verlegten Längsschienen 28 abgestützt, auf denen der Prüfstand II durch den Betrieb des Motors 26 verschoben werden kann.

Wie aus Fig. 1 und dem oberen Teil der Fig. 3 ersichtlich, sind an den beiden Überfahrplatten 5 des längsverfahrbaren Prüfsatzes II eine vordere und eine hintere stabile Gliederkette 13 mit oberseitigen schmalen profilierten Tragplatten 11, 12 befestigt. Die Länge der schmalen Tragplatten entspricht der Breite der Überfahrplatten 5. Die Gliederketten 13 mit ihren Tragplatten 11, 12 bilden die jalousieartigen Fahrstreifen vor und hinter dem längsverfahrbaren Prüfsatz II. An dem in Fig. 1 rechten Ende sowie zwischen den beiden Prüfsätzen I und II ist in der Grube III je ein Speicher 13a, 13b vorgesehen. Je nach der Position des Prüfstandes II wird einer der Endabschnitte der vorderen bzw. hinteren Gliederkette 13 mit den Tragplatten in jeweils einem dieser Speicher 13a, 13b unter Bildung einer in Fig. 1 dargestellten Schlaufe aufgenommen. Diese Speicher ermöglichen somit auch bei langen Verfahrwegen des Prüfsatzes II eine relativ geringe Tiefe der Grube III.

In den Figuren 5 und 6 ist eine Ausführung eines Prüfsatzes im einzelnen dargestellt. Der Prüfsatz besitzt einen stabilen Tragrahmen 6, der entweder am ortsfesten Unterbau (Prüfsatz I) oder an dem über den Linearantrieb 27 verfahrbaren Unterbau (Prüfsatz II) befestigt sein kann. Zur Dämpfung und Isolation kann die Abstützung des jeweiligen Prüfsatzes über Dämpfungselemente 7 erfolgen.

Zwischen zwei stabilen Tragwänden 6a, 6b des Tragrahmens 6 ist die vorzugsweise als elektrischer Synchronmotor ausgebildete Antriebsmaschine 9 angeordnet, auf deren beidseitig vorstehender Welle 33 je eine Trommel 3 befestigt ist. Das Statorgehäuse 9a der Antriebsmaschine 9 weist in jeder Stirnwand 9b, 9c ein Wälzlager 10 für die Welle 33 und eine abstehende Lagerhülse auf, an welcher die radial inneren Enden von vier um jeweils 90° winkelversetzten Blattfedern 48 befestigt sind. Die radial äußeren Enden dieser als Spannbänder wirkenden Federelemente 48 sind an einem Kranz befestigt, der in einer Kreisöffnung der jeweiligen Tragwand 6a, 6b fest montiert ist.

Diese Blattfedern 48 bilden eine allseitige Aufhängung für die aus der Antriebsmaschine 9 und den beiden Trommeln 3 bestehenden Baugruppe im Tragrahmen 6, wobei diese Blattfedern 48 nur die Gewichtskräfte dieser Baugruppe 3, 9 in den Tragrahmen 6 übertragen. Die Blattfedern 48 sind so ausgelegt und ausgerichtet, daß sie die im Prüfbetrieb auftretenden kleinen Drehbewegungen des Statorgehäuses 9a der Antriebsmaschine 9 nicht bzw. nur unwesentlich beeinflussen.

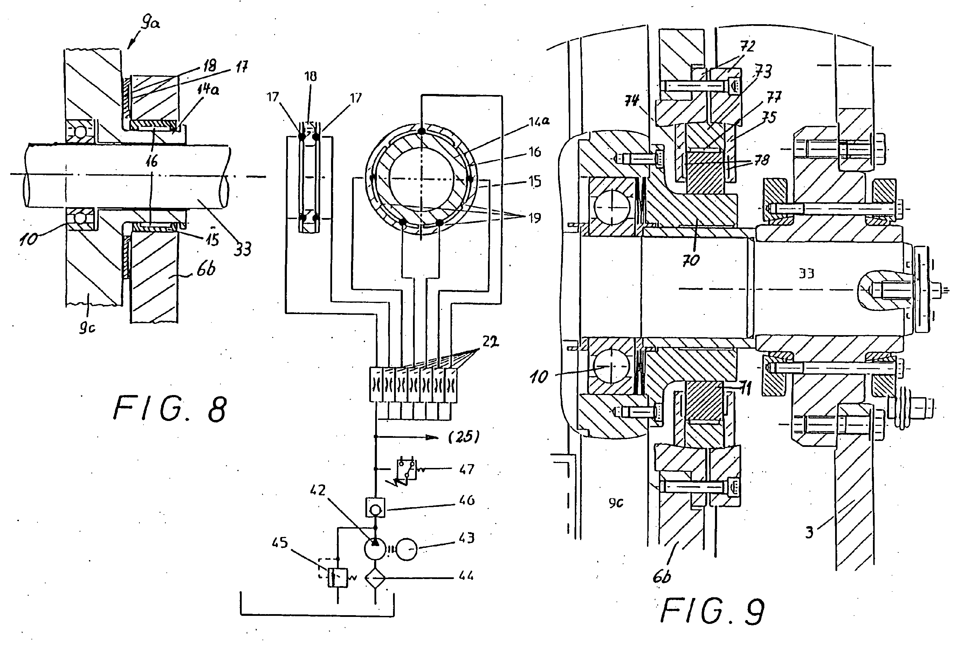

Eine andere Lageranordnung des Statorgehäuses 9a in der einen Wand 6b des Tragrahmens 6 ist in Fig. 8 schematisch im Axialschnitt und im Querschnitt zusammen mit einer Druckölversorgung gezeigt. Die Welle 33 ist in einem Wälzlager 10 in der jeweiligen Stirnwand 9b, 9c gelagert. Eine an der jeweiligen Stirnwand 9b bzw. 9c angeformte Hülse 14a bildet ein radial inneres Gleitlagerelement. In einer Öffnung der Tragwand 6b ist ein Lagerring 15 befestigt, in dem über den Umfang verteilte Taschen 16 eingearbeitet sind, die durch Stege 19 voneinander getrennt sind. Im linken Axialschnitt der Fig. 8 ist ein weiterer Lagerring 18 gezeigt, der zwischen der Außenfläche der Stirnwand 9c des Statorgehäuses 9a und der dieser zugekehrten Seitenfläche der Seitenwand 6b des Tragrahmens 6 angeordnet ist. Auch dieser Lagerring 18 weist nutenförmige Öltaschen 17 an einer oder an beiden Stirnseiten auf. Die Öltaschen 16, 17 werden über gesonderte Leitungen mit Druckflüssigkeit beaufschlagt.

Die Drehmomentabstützung des Statorgehäuses 9a erfolgt über eine Kraftmeßdose 20, die gemäß Fig. 6, 7 an einem seitlichen Ansatz 21 des Statorgehäuses befestigt ist. Das Funktionsglied dieser Kraftmeßdose 20 ist über eine Stange mit einem Kolben 24 verbunden, der in einem am Tragrahmen 6 befestigten flachen Zylinder 25 schwimmend aufgenommen ist. Jede Kolbenstirnfläche wird mit einem geregelten Druckölstrom beaufschlagt, der von einer in Fig. 8 schematisch dargestellten Druckölversorgung über Regelventile 22 oder auch aus einer eigenständigen Versorgungseinrichtung zugeführt werden kann.

Die Druckölversorgung für die Gleitlager 14, 15, 18 und für den Kolben 24 der hydraulischen Abstützung der Kraftmeßdose 20 umfaßt bei dem bevorzugten Ausführungsbeispiel eine von einem Motor 43 angetriebenen Ölpumpe 42, die Hydrauliköl aus einem Sammelbehälter über einen Filter 44 ansaugt und über eine Rückschlagventil 46 in das Leitungssystem drückt. Das überschüssige Hydrauliköl wird aus den Lagerstellen zum Sammelbehälter über ein Druckbegrenzungsventil 45 zurückgeführt, das einen ausreichenden und ggf. einstellbaren hydrostatischen Druck in den Lagerteilen gewährleistet. Zur individuellen Dosierung und Steuerung des Drucköltromes zu den verschiedenen Lagerstellen und zum Zylinder sind in den Zweigleitungen Reglerbaugruppen 22 eingeschaltet. Ein Druckschalter 47 in einer Rücklaufleitung gewährleistet einen zur reibungsfreien Lagerung ausreichenden Öldruck in den Gleitlagern 14, 17 und zur schwimmenden Abstützung des Kolbens 24 im Zylinder 25 einen vorzugsweise konstanten Volumenstrom. Das aus den Lagerstellen bzw. dem Zylinder austretende Öl wird über nicht dargestellte Rücklaufleitungen zum Sammelbehälter zurückgeführt.

Eine andere Ausführung der Gleitlageranordnung ist in Fig. 9 in vergrößertem Axialschnitt dargestellt. Wie bei der vorstehend beschriebenen Gleitlageranordnung ist auch bei dieser Ausführung die Welle 33 beidseitige in den Stirnwänden 9b, 9c des Statorgehäuses 9a in je einem Wälzlager 10 gelagert. An der Außenseite der Lagerbohrung in der Stirnwand 9c ist eine Buchse 70 angeflanscht, auf der ein Lagerring 71 sitzt. In der Aufnahmeöffnung der Tragwand 6b ist ein zweiteiliger Spannring 72 mit bogenförmiger Innenfläche angeordnet, der einen Lagerring 73 und zwei diesem benachbarte Lagerscheiben 74, 75 mit jeweils balligen Außenflächen umschließt. Durch Anziehen von Spannschrauben 76 wird der Spannring 72 an der Tragwand 6b befestigt, wobei gleichzeitig eine Klemmung der beiden Lagerscheiben 74, 75 und des Lagerrings 73 in einer optimierten Ausrichtung erfolgt. In den beiden Lagerscheiben 74, 75 und in dem Lagerring 73 sind nutenförmige Öltaschen 77, 78 ausgebildet, die mit einer vorstehend beschriebenen Druckölversorgung in Strömungsverbindung stehen.

Bei den Lageranordnungen nach Fig. 8 und 9 wird vor dem Einschalten der Antriebsmaschine 9 in den Öltaschen ein hydraulischer Druck aufgebaut, so daß das Statorgehäuse 9a reibungslos und praktisch spielfrei in den beiden Tragwänden 6a, 6b des Tragrahmens 6 gelagert ist. Die im Prüfbetrieb auftretenden Drehbewegungen des Statorgehäuses 9a können somit verlustlos in die Druckmeßdose 20 eingeleitet werden, wodurch sich die Genauigkeit der Drehmomenterfassung wesentlich erhöht.

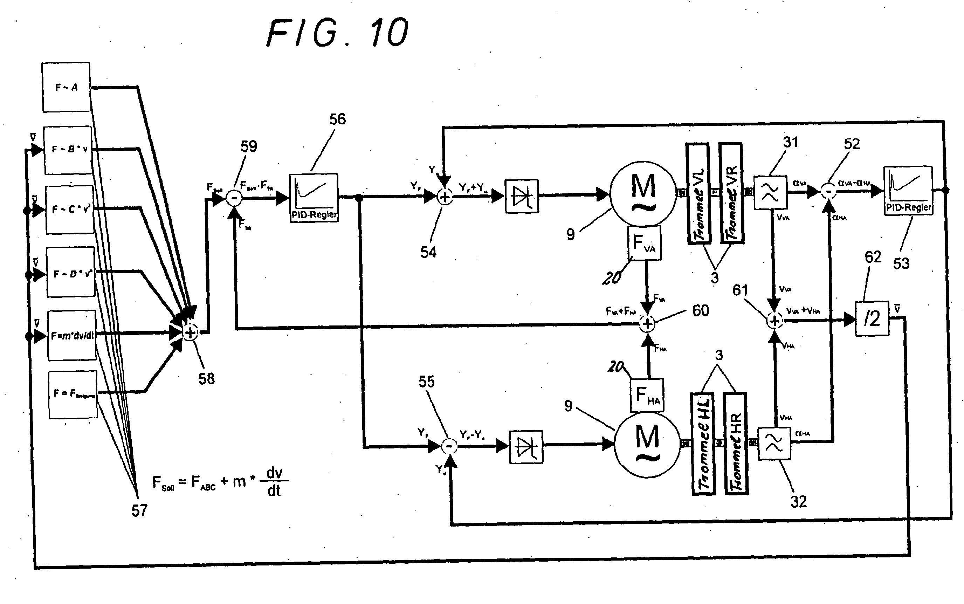

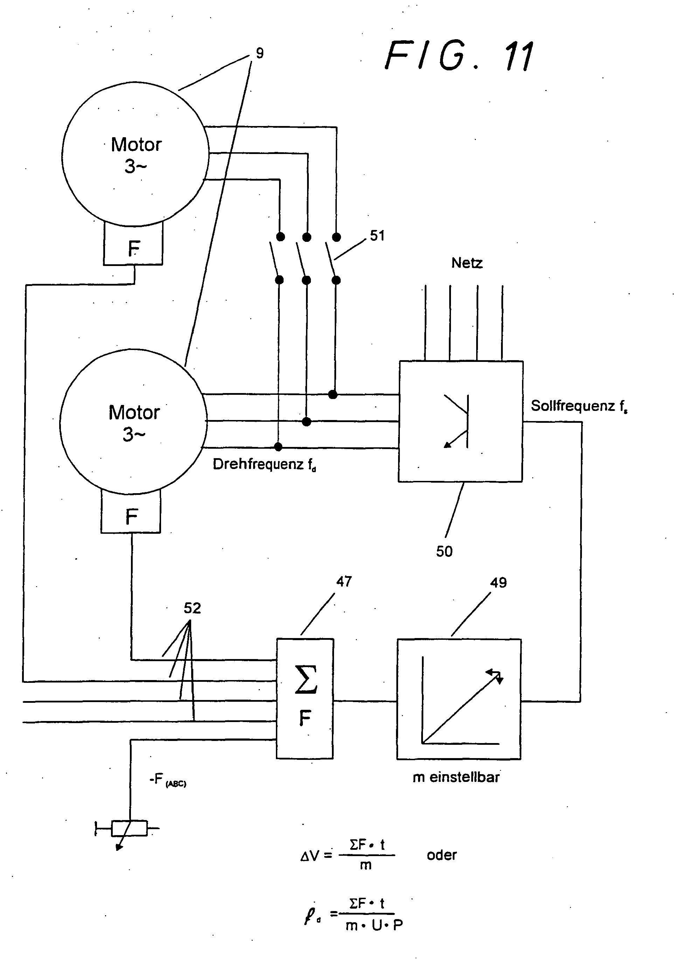

Im folgenden wird die Regelung bzw. Steuerung der Antriebsmaschinen der vorstehend beschriebenen Prüfstände anhand der Figuren 10, 11 erläutert.

Ein in Fig. 10 links schematisch dargestellter Fahrwiderstandssimulator 57 errechnet passend zur Fahrgeschwindigkeit die für das jeweilige Prüffahrzeug ausgewählte Belastung. Zusätzlich wird aus einer Geschwindigkeitsänderung, beispielsweise einer Beschleunigung, ein Signal erzeugt, das sich aus der Differenz der gewünschten zu simulierenden Masse und der Grundmasse der drehenden Bauteile des Prüfstandes multipliziert mit der Beschleunigung entsprechend der dargestellten Gleichung errechnet. Diese Fahrwiderstandswerte werden in einem Addierglied 58 addiert, dessen Ausgangsgröße die Soll-Kraft für einen Fahrwiderstandsregler 56 darstellt.

In einem Subtrahierer 49 wird die vom Fahrwiderstandssimulator 57 ermittelte Soll-Kraft mit den von den Kraftmeßdosen 20 erzeugten Ist-Kräften verglichen, welche in einem Addierer 60 summiert werden. Das Differenzsignal F-Soll minus F-Ist wird auf den Fahrwiderstandsregler 56 geschaltet, dessen Stellgröße $Y_f$ die Stellgröße für die Antriebsmaschinen 9 darstellt. Von zwei Geschwindigkeitssensoren 31, 32, die z.B. die Drehgeschwindigkeit der jeweiligen Welle des ersten bzw. zweiten Prüfsatzes erfassen, wird ein Mittelwert 62 für die Geschwindigkeit in einem Addierglied 61 errechnet. Diese Geschwindigkeitssensoren 31, 32 sind vorzugsweise als Sinus-/Cosinus-Geber ausgeführt, so daß aus diesen Sensorsignalen die Winkel der jeweiligen Antriebswelle 33 gemessen werden können. In einem Vergleicher 52 wird die Winkeldifferenz der beiden Motorwellen 33 durch Subtraktion errechnet. Diese Winkeldifferenz wird auf den Regler 53 geschaltet. Der Ausgang des Reglers 53 wird nun bei der Trommel für die Vorderräder zum Stellsignal des Fahrwiderstandsreglers 56 im Knoten 54 addiert. Gleichzeitig wird das Stellsignal des Reglers 53 mit dem Stellsignal des Reglers 56 im Subtrahierer 55 subtrahiert. Das dadurch auf der einen Seite aufaddierte Drehmomentsignal wird auf der anderen Seite abgezogen, so daß das vom Fahrwiderstandsregler 56 erzeugte Regelsignal in der Summe unverändert bleibt.

Die in Fig. 11 dargestellte Regelung für die Synchronmaschinen benötigt keine Inkrementalgeber oder Tachogeneratoren als Geschwindigkeitsmeßeinrichtungen. Die Kräfte F der Antriebsmaschinen 9 und die eingestellten Fahrwiderstände $F_{abc}$ werden in einem Summierglied 47 addiert und die sich ergebende Summe wird durch die zu simulierende einstellbare Masse m im Glied 49 dividiert, wodurch eine Trommelumfangsgeschwindigkeit erhalten wird. Die so errechnete Soll-Geschwindigkeit wird entsprechend den jeweiligen Trommeldurchmessern in eine Wellendrehzahl und entsprechend der Polpaarzahl der verwendeten Synchronmaschinen 9 über einen oder mehrere Frequenzinverter in eine Ausgangsfrequenz umgesetzt, mit der die Synchronmaschinen 9 angesteuert werden. Der Drehwinkel aller Antriebsmaschinen ist konstruktionsbedingt fest mit der Betriebsfrequenz gekoppelt. Dadurch entfällt die sonst übliche Messung der Geschwindigkeit. Die erforderliche Erregerleistung für die Synchronmaschinen kann über Schleifringe zugeführt werden, wobei die Synchronmaschinen auch über eine permanente Erregung verfügen können. Schließlich kann den Synchronmaschinen zusätzlich zur permanenten oder Fremderregung eine Kurzschlußwicklung zugeordnet sein, die zur Unterdrückung der bei Synchronmaschinen üblichen Pendelschwingungen dient.

Gemäß der Formeln in Fig. 11 errechnet sich die Prüfgeschwindigkeit aus der Summe aller Kräfte, dividiert durch die zu simulierenden Massen. Aus dieser errechneten Prüfgeschwindigkeit wird entsprechend dem Durchmesser der von den Synchronmaschinen angetriebenen Trommeln 3 und der Polpaarzahl dieser Synchronmaschinen eine Sollfrequenz fs errechnet, die über den Frequenzinverter 50 in ein Drehstromsignal mit einer der Soll-Frequenz entsprechenden Drehfrequenz $f_D$ umgewandelt wird. Die Antriebs-Synchronmaschinen 9 werden an diesem Frequenzinverter 51 parallel betrieben. Die Umschaltung von Zwei-Rad- auf Vier-Rad-Betrieb ist einfach mit einem Kontaktschalter 51 möglich. Die Messung der tatsächlichen Trommelgeschwindigkeiten ist nicht erforderlich, da die Soll-Frequenz durch die direkte Kopplung der Synchronmaschinen 9 an die Drehfrequenz keine Abweichung erlaubt, d.h. die in der in Fig. 11 dargestellten Formel berechnete Soll-Geschwindigkeit entspricht gleichzeitig der tatsächlichen Ist-Geschwindigkeit.

Auf den vorstehend beschriebenen Trommelprüfständen werden Untersuchungen und Tests auch bei extrem hohen und extrem niedrigen Temperaturen z.B. in Klimakammern durchgeführt, um die Eigenschaften und das Betriebsverhalten der Kraftfahrzeuge und deren Einzelkomponenten bei extremen Klimabedingungen zu erfassen. Damit auch unter diesen Verhältnissen praxisgerechte Ergebnisse erzielt werden können, sieht die Erfindung vor, daß die jeweilige Umgebungstemperatur und auch der herrschende Luftdruck als Einflußgrößen in die Simulation mit einbezogen werden. Damit wird die Tatsache berücksichtigt, daß die Verlustkennlinie bei dem erfindungsgemäßen Prüfstand im wesentlichen von den sogenannten Ventilationsverlusten bestimmt wird, da bei diesem Prüfstand praktisch keine anderen Verlustkomponenten z.B. aus Lagerreibung oder dergleichen auftreten. Diese Ventilationsverluste sind direkt proportional zur Luftdichte, die wiederum aus der Temperatur und dem herrschenden Luftdruck berechnet wird. Zur Einbeziehung der Luftdichteänderungen in die praxisecht simulierte Ventilationsverluste wird in einem Kalibrier- bzw. Eichbetrieb der Prüfstand unter vorgegebenen Bedingungen bei Normaltemperatur und normalem Luftdruck betrieben und die Werte der erfaßten Ventilationsverluste für die jeweiligen Geschwindigkeiten werden abgespeichert. Wenn ein Prüfbetrieb unter anderen Temperatur- oder Luftdruckverhältnissen durchgeführt wird, können dann die sich ändernden Ventilationsverluste auf der Grundlage der abgespeicherten Werte bestimmt und als Simulationsparameter mit berücksichtigt werden.

**Patentansprüche**

1.  Prüfstand für Kraftfahrzeuge insbesondere mit mehreren angetriebenen Achsen, mit mehreren Prüfsätzen (I und II), jeweils bestehend aus zwei Trommeln (3), einem Tragrahmen (6) und einer Antriebs-/Bremsmaschine (9), wobei die Antriebsmaschinen beider Prüfsätze (I und II) elektrisch synchronisiert sind,
    **dadurch gekennzeichnet, dass**.

    - die Prüfsätze (I und II) in zumindest einer Grube (III) angeordnet sind,
    - die Antriebs-/Bremsmaschine (9) zwischen den beiden Trommeln (3) im Tragrahmen (6) pendelnd gelagert ist,

- zumindest einer der Prüfsätze (I bzw. II) in Längsrichtung verfahrbar ist,
- Mittel zur Synchronisation der beiden Antriebsmaschinen (9) vorhanden sind, die gestaltet sind, aus den gemessenen Phasenwinkeln der Antriebsmaschinen (9) durch Subtraktion eine Winkeldifferenz zu bilden,
- ein PID-Regler (56) vorhanden ist, der so gestaltet ist, dass auf ihn diese Winkeldifferenz geschaltet wird, und dass im Verwendungsfall das von dem PID-Regler (56) erzeugte Ausgangssignal zu dem Stellsignal für die erste Antriebsmaschine (9) addiert wird und von dem Stellsignal für die zweite Antriebsmaschine (9) subtrahiert wird, so dass die Summe der Drehmomente gleich bleibt.

2. Prüfstand nach Anspruch 1, **dadurch gekennzeichnet, dass** jeder Antriebs-/Bremsmaschine (9) ein Sinus-/Cosinus-Encoder (31, 32) zur genauen Erfassung der Winkelstellung bzw. der Winkelgeschwindigkeit der Maschinenwelle (33) zugeordnet ist.

3. Prüfstand nach Anspruch 1, **dadurch gekennzeichnet, dass** das Statorgehäuse (9a) der entsprechenden Antriebs-/Bremsmaschine (9) über eine Lageranordnung (15-18; 72-78) mit eingearbeiteten Druckflüssigkeitstaschen (16, 17; 77, 78) in dem Tragrahmen (6) gelagert ist.

4. Verfahren zum Prüfen von Kraftfahrzeugen auf einem Rollen- bzw. Trommelprüfstand, bei welchem das zu prüfende Kraftfahrzeug mit seinen Vorder- und Hinterrädern auf vorderen und hinteren Trommeln (3) steht, die paarweise direkt von je einer elektrischen Antriebs-/Bremsmaschine (9) angetrieben bzw. abgebremst werden, **dadurch gekennzeichnet, dass**

- zur Synchronisation der beiden Antriebe aus den gemessenen Phasenwinkeln der Antriebsmaschinen (9) durch Subtraktion eine Winkeldifferenz gebildet wird,
- diese Winkeldifferenz auf einen PID-Regler (56) geschaltet wird und
- das von dem PID-Regler (56) erzeugte Ausgangssignal zu dem Stellsignal für die erste Antriebsmaschine (9) addiert und von dem Stellsignal für die zweite Antriebsmaschine (9) subtrahiert wird, so dass die Summe der Drehmomente gleich bleibt.

5. Verfahren nach Anspruch 4, **dadurch gekennzeichnet, dass** das vom PID-Regler (56) erzeugte Signal auf die eine Antriebsmaschine phasenrichtig und auf die zweite Antriebsmaschine gegenphasig aufgeschaltet wird.

6. Verfahren nach einem der Ansprüche 4 oder 5, **dadurch gekennzeichnet, dass** die Drehgeschwindigkeit der beiden Antriebsmaschinen (9) von Sensoren (31, 32) mit analogen Sinus-/Cosinus-Ausgang gemessen wird.

7. Verfahren nach Anspruch 6, **dadurch gekennzeichnet, dass** aus den Sinus-/Cosinus-Signalen über Schmitt-Trigger Quadratur-Signale erzeugt werden, die als Ist-Werte für die Vektorregler der Antriebsmaschinen zur Verfügung stehen.

8. Verfahren nach Anspruch 6, **dadurch gekennzeichnet, dass** die analogen Sinus-/Cosinus-Signale mittels A/D-Wandlern digitalisiert werden.

9. Verfahren nach Anspruch 7 oder 8, **dadurch gekennzeichnet, dass** zur Unterdrückung der bei Synchronmaschinen üblichen Pendelschwingungen eine Kurzschlusswicklung zusätzlich zur permanenten oder fremden Erregung verwendet wird.

10. Verfahren nach zumindest einem der Ansprüche 4 bis 9, **dadurch gekennzeichnet, dass** zur Berücksichtigung von klimatischen Verhältnissen bei der Bestimmung der parasitären Verluste die Temperatur und der Luftdruck der Prüfstandumgebung gemessen und durch Vergleich mit abgespeicherten Kalibrierwerten Korrektur- bzw. Kompensationswerte bestimmt werden.

## Claims

1. Dynamometer for motor vehicles, particularly vehicles having a plurality of driven axles, comprising:

a plurality of test sets (I and II) each consisting of two drums (3), a support frame (6) and an electric driving/braking motor (9), the driving motors of the two test sets (I and II) being electrically synchronised, **characterised in that**

- The test sets (I and II) are disposed in at least one pit (III),
- The driving/braking motor (9) is borne in the support frame (6) between the two drums (3) in a pendulum fashion,
- at least one of said test sets (I or II) is movable in a longitudinal direction,
- means of synchronisation of the two driving motors (9) are provided, designed so as to produce a phase angle difference from the measured phase angles of the driving motors (9) by subtraction,
- a PID controller (56) is provided, which is designed such that this phase angle difference is applied to it, and that in this application the output signal generated by the PID controller (56) is added to the control signal for the first drive machine (9) and subtracted from the control signal for the second drive machine (9), so that the sum of the torques remains constant.

2. Dynamometer according to claim 1, **characterised in that** each drive/brake motor (9) is assigned a sine-cosine encoder (31, 32) for precise acquisition of the angular position or angular velocity of the machine shaft (33).

3. Dynamometer according to claim 1, **characterised in that** the stator housing (9a) of the corresponding drive/brake motor (9) runs on an arrangement of bearings (15-18; 72-78) with integrated hydraulic fluid tanks (16, 17; 77, 78) in the support frame (6).

4. Method for testing motor vehicles on a roll dynamometer or drum dynamometer, in which the motor vehicle to be tested stands with its front and rear wheels on front and rear drums (3), which are each driven or braked respectively in pairs directly by an electrical drive/brake machine (9), **characterised in that**

   - in order to synchronise both drives, a phase angle difference is produced from the measured phase angles of the drive machines (9) by subtraction,
   - this phase angle difference is applied to a PID controller (56) and
   - the output signal generated by the PID controller is added to the control signal for the first drive machine (9) and subtracted from the control signal for the second drive machine (9), so that the sum of the torques remains constant.

5. Method according to claim 4, **characterised in that** the signal generated by the PID controller (56) is applied in-phase to the one drive motor and applied out of phase to the second drive motor.

6. Method according to one of claims 4 or 5, **characterised in that** the speed of rotation of both drive machines (9) is measured by sensors (31, 32) with analogue sine-cosine output.

7. Method according to claim 6, **characterised in that** quadrature signals are generated from the sine-cosine signals via Schmitt triggers, which are available as actual values for the vector controllers of the drive motors.

8. Method according to claim 6, **characterised in that** the analogue sine-cosine signals are digitised by means of A-D converters.

9. Method according to claim 7 or 8, **characterised in that** to suppress the pendulum oscillations usual in synchronous machines a squirrel cage winding is used in addition to the permanent or external excitation.

10. Method according to at least one of claims 4 to 9, **characterised in that** in order to take climatic conditions into account in a determination of parasitic losses, the temperature and air pressure of the environment of a dynamometer are measured and correction and/or compensation values are determined by comparison with stored calibration values.

## Revendications

1. Banc d'essai pour véhicules automobiles, en particulier à plusieurs essieux moteurs, avec plusieurs blocs de contrôle (I et II), composés chacun de deux tambours (3), un cadre porteur (6) et un moteur d'entraînement/de freinage (9), les moteurs d'entraînement des deux blocs de contrôle (I et II) étant électriquement synchronisés,
   **caractérisé en ce que**

   - les blocs de contrôle (I et II) sont disposés dans au moins une fosse (III),
   - le moteur d'entraînement/de freinage (9) est monté dans le cadre porteur (6) en palier oscillant entre les deux tambours (3),
   - au moins un des blocs de contrôle (I, II) peut être déplacé en direction longitudinale,
   - des moyens de synchronisation des deux moteurs d'entraînement (9) sont présents, configurés pour former un différentiel angulaire par soustraction des angles de phase mesurés des moteurs d'entraînement (9),
   - **en ce qu'**un régulateur PID (56) est présent, configuré pour que ledit différentiel angulaire lui soit délivré, et que le signal de sortie généré par le régulateur PID (56) en cas d'utilisation soit additionné au signal de réglage pour le premier moteur d'entraînement (9) et soustrait du signal de réglage pour le deuxième moteur d'entraînement (9), de telle manière que le total des couples reste constant.

2. Banc d'essai selon la revendication 1, **caractérisé en ce qu'**un encodeur sinus/cosinus (31, 32) est affecté à chaque moteur d'entrainement/de freinage (9) pour la saisie exacte de la position angulaire et de la vitesse angulaire de l'arbre de moteur (33).

3. Banc d'essai selon la revendication 1, **caractérisé en ce que** le carter de stator (9a) du moteur d'entraînement/de freinage (9) correspondant est monté dans le cadre porteur (6) au moyen d'un dispositif de paliers (15 à 18 ; 72 à 78) à poches de liquide sous pression (16, 17 ; 77, 78) incorporées.

4. Procédé pour le contrôle de véhicules automobiles sur un banc d'essai à rouleaux ou à tambours, où le véhicule automobile à contrôler est disposé avec ses roues avant et arrière sur des tambours (3) avant et arrière entraînés ou freinés par paires, chacune directement par un moteur d'entraînement/de freinage (9) électrique,
**caractérisé en ce que**

- un différentiel angulaire pour la synchronisation des deux moteurs est formé par soustraction des angles de phase mesurés des moteurs d'entraînement (9),
- ce différentiel angulaire est délivré à un régulateur PID (56), et
- le signal de sortie généré par le régulateur PID (56) est additionné au signal de réglage pour le premier moteur d'entraînement (9) et soustrait du signal de réglage pour le deuxième moteur d'entraînement (9), de telle manière que le total des couples reste constant.

5. Procédé selon la revendication 4, **caractérisé en ce que** le signal généré par le régulateur PID (56) est délivré en conformité de phase au premier moteur d'entraînement, et en opposition de phase au deuxième moteur d'entraînement.

6. Procédé selon l'une des revendications 4 ou 5, **caractérisé en ce que** la vitesse de rotation des deux moteurs d'entraînement (9) est mesurée par des capteurs (31, 32) à sortie sinus/cosinus analogique.

7. Procédé selon la revendication 6, **caractérisé en ce que** des signaux de quadrature sont générés par déclencheur de Schmitt à partir des signaux sinus/cosinus, lesquels sont disponibles comme valeurs effectives pour le régulateur vectoriel des moteurs d'entraînement.

8. Procédé selon la revendication 6, **caractérisé en ce que** les signaux sinus/cosinus analogiques sont numérisés au moyen de convertisseurs analogique/numérique.

9. Procédé selon la revendication 7 ou 8, **caractérisé en ce que** pour la suppression des oscillations pendulaires usuelles avec les moteurs synchrones, une bobine en court-circuit est utilisée en complément de l'excitation permanente ou externe.

10. Procédé selon l'une des revendications 4 à 9 au moins, **caractérisé en ce que**, pour la prise en compte des conditions climatiques pour la détermination des pertes parasitaires, la température et la pression atmosphérique sont mesurées dans l'environnement du banc d'essai, et **en ce que** des valeurs de correction ou de compensation sont déterminées par comparaison avec des valeurs de calibrage mémorisées.

*FIG. 1*

*FIG. 3*

*FIG. 2*

*FIG. 4*

EP 1 333 269 B1

FIG. 5

FIG. 6

FIG. 7

FIG. 8

FIG. 9

EP 1 333 269 B1

# FIG. 10

$$F_{Soll} = F_{ABC} + m * \frac{dv}{dt}$$

F ~ A

F ~ B * v

F ~ C * v

F ~ D * v'

F = m*dv/dt

F = F_{Bremse}

57

58

59

56
PID-Regler

$F_{Soll}$   $F_{Soll} - F_{Ist}$

$F_{Ist}$

54

$Y_r$   $Y_r + Y_d$

9   M

$F_{VA}$   20

$F_{VA} + F_{HA}$   60

Trommel VL   Trommel VR   3

31   $\alpha_{VA}$

52   $\alpha_{VA} - \alpha_{HA}$

53   PID-Regler

$v_{VA}$

61   $v_{VA} + v_{HA}$

62   $\bar{v}$   /2

55   $Y_r$   $Y_r - Y_d$   9   M

$F_{HA}$   20

Trommel HL   Trommel HR   3

32   $\alpha_{HA}$

$v_{HA}$

# FIG. 11

Motor 3~

F

51

Netz

Motor 3~

F

Sollfrequenz $f_s$

Drehfrequenz $f_d$

50

52

47

49

$\Sigma$
F

$-F_{(ABC)}$

m einstellbar

$$\Delta V = \frac{\Sigma F \cdot t}{m} \qquad \text{oder}$$

$$\rho_d = \frac{\Sigma F \cdot t}{m \cdot U \cdot P}$$